# EUROPEAN PATENT APPLICATION

(11) **EP 1 577 837 A1**
(43) Date of publication of application: **21.09.2005**
(21) Application number: 04006425.5
(22) Date of filing: 17.03.2004
(51) Int. Cl.: G06T 11/00, G06T 15/00

(54) **3D cone beam reconstruction**

(71) Applicant: Deutsches Krebsforschungszentrum Stiftung des öffentlichen Rechts, 69120 Heidelberg (DE)
(72) Inventor: Schlegel, Wolfgang, 69118 Heidelberg (DE); Hesser, Jürgen, Dr., 69118 Heidelberg (DE); Kornmesser, Klaus, 67061 Ludwigshafen (DE); Stsepankou, Dzmitry, 68309 Mannheim (DE)
(74) Representative: Schüssler, Andrea

(57) **Abstract**

A backprojection unit is described that is adapted for backprojecting pixel data of n acquired projections onto a voxel subvolume, with n being a natural number. For each of the n projections, the backprojection unit comprises voxel center determination means adapted for projecting m contiguous voxels onto a respective one of the projections, with m ≥ 2 being a natural number, memory access means adapted for fetching, for each of the m projected voxel centers, pixel data of pixels adjacent to the projected voxel center from a respective projection buffer, and multiplexing means adapted for distributing the fetched pixel data to m different pipelines. Furthermore, a method for backprojecting pixel data of n acquired projections onto a voxel subvolume is disclosed.

## Description

The invention relates to a backprojection unit for backprojecting pixel data of acquired projections onto a voxel subvolume, and to a method for backprojecting pixel data of acquired projections onto a voxel subvolume.

### Background of the Invention

Reconstructing 3D voxel data by backprojecting a plurality of acquired projections onto a voxel volume is a computationally expensive task. In this field, the long-term objective is to arrive at a real-time reconstruction of 3D voxel volumes. In order to improve the reconstruction speed, dedicated hardware comprising a multitude of pipelines has been developed. For example, hardware units for performing the backprojection operations have been implemented, e.g. by means of FPGAs (Field Programmable Gate Arrays). Such a solution is e.g. described in German Patent Application DE 101 11 827 A1 to W. Schlegel et al.

However, the available memory is not always sufficient for simultaneously storing pixel data of various different projections.

### Summary of the Invention

It is an object of the invention to provide an improved backprojection unit and method for backprojecting pixel data of acquired projections onto a voxel subvolume.

The object of the invention is solved by a backprojection unit according to claim 1 and by a method for backprojecting pixel data onto a voxel subvolume according to claim 20.

The backprojection unit according to embodiments of the present invention is adapted for backprojecting pixel data of n acquired projections onto a voxel subvolume, with n being a natural number. For each of the n projections, the backprojection unit comprises voxel center determination means adapted for projecting m contiguous voxels onto a respective one of the projections, with m ≥ 2 being a natural number, thus obtaining m projected voxel centers per projection. The backprojection unit further comprises memory access means adapted for fetching, for each of the m projected voxel centers, pixel data of pixels adjacent to the projected voxel center from a respective projection buffer; and multiplexing means adapted for distributing the fetched pixel data to m different pipelines.

According to embodiments of the present invention, voxel centers of m contiguous voxels are simultaneously projected onto a certain projection plane, and pixel data adjacent to the projected voxel centers is fetched from the corresponding projection buffer. Then, the respective projection's contribution to the m contiguous voxels is calculated in parallel.

By processing several voxels per projection synchronously, a new degree of parallelism is introduced. As a consequence, the amount of pixel data that has to be fetched from a certain projection buffer is increased. The present invention provides solutions how to handle a multitude of synchronous read accesses directed to one projection buffer. The pixel data fetched from the projection buffer is then multiplexed to m different pipelines.

According to embodiments of the present invention, the number of projections processed in parallel can be reduced without reducing the overall degree of parallelism. The parallelism is shifted from parallely processing different projections to parallely processing an increased number of voxels per projection.

This allows to reduce the memory required for allocating the various different projection buffers. The total amount of memory required for implementing the backprojection unit is reduced. For this reason, the implementation of the backprojection unit, e.g. by means of FPGAs (Field Programmable Gate Arrays) is simplified. Furthermore, the amount of 2D projection data that has to be transferred between a main storage and the projection buffers is reduced as well.

In a preferred embodiment of the invention, the backprojection unit further comprises n projection buffers, with each of the projection buffers being adapted for storing pixel data of one of the n projections. For example, pixel data of the acquired projections might be transferred from a memory to the projection buffers, and the pipelines might fetch required pixel data from a respective projection buffer. Preferably, the projection buffers are implemented as projection caches that allow for a low latency read access.

According to another preferred embodiment, each of the projection buffers comprises at least (2m+2) different memory banks. From a respective projection buffer, pixel data of pixels adjacent to m projected voxel center have to be fetched simultaneously. Hence, from a respective projection buffer, up to (2m+2) different pixel values might have to be fetched simultaneously. In terms of processing speed, it would therefore be advantageous to perform a multitude of read accesses to one projection buffer in parallel. Such a solution can be realized by providing projection buffers that comprise a multitude of different memory banks. Parallel read accesses may be directed to each of the memory banks, and a multitude of pixel values of a certain projection may be fetched simultaneously.

According to a preferred embodiment, the memory access means are adapted for accessing some of the at least (2m+2) memory banks of the corresponding projection buffer in parallel. Thus, it is possible to fetch pixel values of up to (2m+2) pixels in parallel. Then, the obtained pixel data might e.g. be distributed to the backprojection unit's different pipelines.

According to another preferred embodiment, pixel data of neighboring pixels are stored in different memory banks. For example, a projected voxel center might be surrounded by a quadruple of four adjacent pixels. For simultaneously fetching the pixel values of these four pixels from the corresponding projection buffer, the four pixel values have to be stored in four distinct memory banks of said projection buffer. Hence, by storing neighboring pixels to different memory banks, pixel values of adjacent pixels can be fetched simultaneously.

Preferably, a respective memory bank a pixel is stored in is selected by means of a multidimensional index, wherein the multidimensional index is derived from the pixel coordinates (x, y). To each of the memory banks, a certain multidimensional index is assigned. By converting the pixel coordinates (x, y) into a corresponding multidimensional index, the memory bank the pixel value is stored in can be identified. Then the pixel value can be read from the selected memory bank.

According to another preferred embodiment, a two-dimensional index (u, v) derived from the pixel coordinates (x, y) is used for selecting a respective one of the memory banks. In this embodiment, the memory banks of a certain projection buffer can be thought of as being arranged in an array comprising several rows and columns. The pixel coordinates (x, y) are converted into a two-dimensional index (u, v) that indicates the row and the column of the memory bank that contains the corresponding pixel value.

Preferably, for m = 4, the two-dimensional index (u, v) is determined as (u, v) = (x mod 5, y mod 2). In this embodiment, each of the projection buffers is realized as an array comprising two rows and five columns of memory banks. If y is an odd number, the upper row will be selected, and if y is even, the lower row will be selected. The respective column of the array is specified by the x coordinate. By applying a modulo operation for converting the pixel coordinates (x, y) into a corresponding two-dimensional index (u, v), it can be made sure that pixel values of neighboring pixels are stored in different memory banks.

In a preferred embodiment, at least one of the pipelines comprises pixel data interpolation means adapted for performing a bilinear interpolation of the pixel data of pixels adjacent to a respective projected voxel center, in order to obtain an interpolated pixel value at the respective projected voxel center. After the coordinates of a respective projected voxel center have been determined, the values of the four pixels adjacent to the projected voxel center are multiplied with their respective distance to the projected voxel center. By performing a bilinear interpolation and determining an interpolated pixel value, the accuracy of the backprojection is improved.

Preferably, at least one of the pipelines further comprises a weighting unit adapted for weighting the interpolated pixel value at the projected voxel center with the inverse square of the distance between voxel and source, in order to obtain a weighted pixel value at the projected voxel center. The power density of radiation emitted by a source declines in accordance with the inverse square of the distance between the respective source and the voxel. For this reason, the interpolated pixel value at the projected voxel center has to be weighted with the inverse square of the distance between voxel and source.

Further preferably, at least one of the pipelines further comprises an adder unit adapted for adding the weighted pixel value at the projected voxel center to voxel data of the corresponding one of the m contiguous voxels. This allows to accumulate the contributions of the n different projections to the m voxels.

Preferably, the weighted pixel values are added to the contents of storage cells that belong to m different shift registers. The contributions of the different projections can be accumulated by using shift registers. For each voxel, the weighted pixel values provided by the various projections are summed up.

According to a preferred embodiment of the invention, voxel data of the m contiguous voxels is stored in storage cells of m shift registers, said shift registers being adapted for accumulating the contributions of the n projections. Further preferably, each of the m shift registers comprises n storage cells that correspond to the n different projections. By means of the n different storage cells, the contributions of n different projections can be processed consecutively.

According to a preferred embodiment of the invention, after voxel data stored in the m shift registers has been updated, the contents of the shift registers are shifted by one position in order to consecutively process the contributions of the n different projections. After n shift operations, the contributions of each of the n projections to each of the m voxels have been considered.

According to another preferred embodiment, the voxel subvolume is a slice of a voxel volume. Further preferably, the slices are oriented perpendicular to an axis of rotation that has been used for acquiring the projections. When a slice of voxels of this kind is projected onto a projection plane, the obtained silhouette of the slice is rather small. Therefore, the region of pixel data that has to be loaded into the corresponding projection buffer is rather small as well. By implementing the voxel subvolumes as slices, the required size of the projection buffers can be further reduced.

Further preferably, a voxel volume is initially segmented into a plurality of columns, with each voxel subvolume being a slice of a respective column. Before the voxel volume is segmented into slices, the volume is divided into a plurality of columns. Next, the columns are segmented into slices, and for each of the slices, a backprojection operation as described above is performed. Segmenting the volume into columns allows to further reduce the size of the slices. Correspondingly, when the slices are projected onto the projection planes, the size of the obtained silhouettes is further reduced. As a consequence, the required size of the projection buffers can be reduced.

According to a preferred embodiment, the backprojection unit is implemented as a hardware unit, in particular by means of a Field Programmable Gate Array (FPGA). By using dedicated hardware, a superior processing speed can be accomplished.

Furthermore, according to embodiments of the present invention, a method for backprojecting pixel data of n acquired projections onto a voxel subvolume is provided, with n being a natural number. The method comprises the following steps that are carried out for each of the n projections: projecting m contiguous voxels onto a respective one of the projections, with m ≥ 2 being a natural number, thus obtaining m projected voxel centers per projection; fetching, for each of the m projected voxel centers, pixel data of pixels adjacent to the projected voxel center from a respective projection buffer, and distributing the fetched pixel data to m different pipelines.

The invention does not have to be implemented in hardware. The invention can also be realised as a computer program product which carries out the method steps as described above when said computer program product is executed on a computer, digital signal processor or the like.

### Brief Description of the Figures

The accompanying drawings, which are incorporated herein and form a part of the specification, illustrate the present invention and, together with the description, further serve to explain the principles of the invention and to enable a person skilled in the pertinent art to make and use the invention.
- Fig. 1: shows a patient who is subjected to an X-rax examination;
- Fig. 2: depicts how a set of projections of a patient's body is acquired;
- Fig. 3A: shows how a voxel center is projected onto a projection plane, in order to obtain the corresponding projected voxel center;
- Fig. 3B: shows the projected voxel center together with 4 adjacent pixels;
- Fig. 4: shows a backprojection unit comprising twelve pipelines;
- Fig. 5: shows a backprojection unit according to an embodiment of the present invention;
- Fig. 6: shows various patterns obtained by projecting m contiguous voxels onto a projection plane;
- Fig. 7: shows a projections buffer comprising ten memory banks;
- Fig. 8: shows a slice of voxels together with the silhouette obtained by projecting the slice onto a projection plane;
- Fig. 9: shows a voxel volume being segmented into four columns; and
- Fig. 10: shows the silhouettes obtained by projecting both a slice of the entire volume and a slice of one of the columns onto a projection plane.

### Detailed Description of Embodiments of the Invention

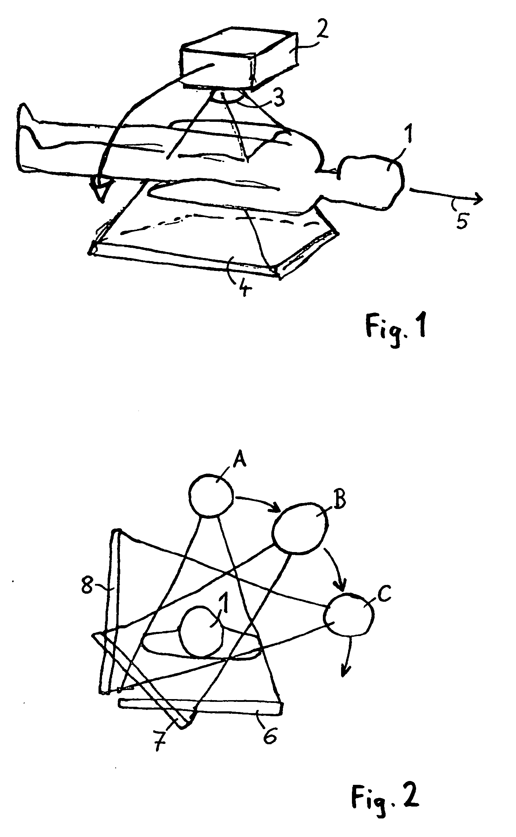

Fig. 1 shows a patient 1 who is subjected to an X-ray examination. The X-ray apparatus comprises an X-ray source 2 that is adapted for emitting a cone beam 3 of X-rays. When passing through the patient's body, the X-rays are attenuated due to interactions with the patient's body. The X-ray apparatus further comprises a detector 4 that is adapted for recording a projected 2D intensity distribution which will further on be referred to as a "projection". The source-detector arrangement can be rotated around an axis of rotation 5. Thus, it is possible to acquire projections that correspond to different angular positions of the source-detector arrangement.

For example, as shown in Fig. 2, the X-ray source might be rotated consecutively to the positions A, B, C, and for each of these angular positions, a corresponding projection 6, 7, 8 might be recorded.

In order to rotate the source-detector arrangement around the axis of rotation 5, both the source and the detector unit may be fixed to a C-shaped bearing, which is commonly referred to as a C-arm. In order to provide for a circular movement of the source-detector arrangement, the C-arm might e.g. be slided within some kind of rail.

It goes without saying that the use of the X-ray apparatus shown in Fig. 1 and Fig. 2 is not restricted to the field of medicine. It can be employed whenever one is interested in a density distribution within a given object. Possible applications comprise e.g. medical and industrial imaging, and quality control. Within the industrial imaging this may comprise radio materiology and radio metallography.

After a plurality of projections corresponding to different angular positions of the source-detector arrangement have been acquired, the three-dimensional density distribution of the examined volume has to be reconstructed. One standard approach to reconstruct volumes from X-ray images is the algorithm of Feldkamp and Kress, which is described in the article "Practical Cone-Beam Algorithm", L.A. Feldkamp, L.C. Davis, J.W. Kress, J. Opt. Sco. Amer., Vol. 1, No. A6, 1994, pp. 612-619. This algorithm is employed quite frequently, because it achieves a good compromise between reconstruction quality and speed. Essentially, the two-dimensional projection data is first subjected to a filtering operation, and then, the projection data is reprojected towards the source.

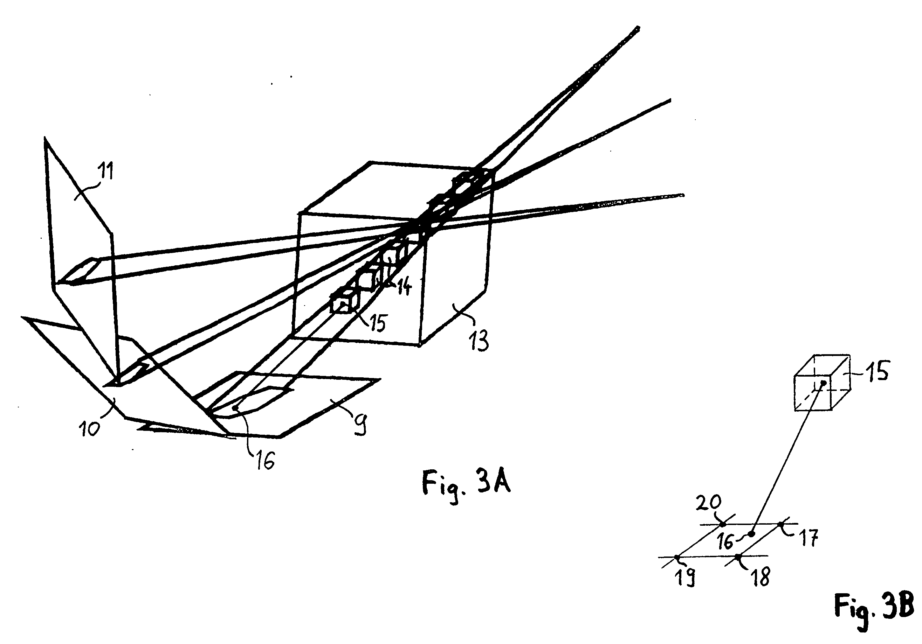

Fig. 3A illustrates how the reprojection of the two-dimensional data is performed. Each of the projections 9, 10, 11 is represented by a two-dimensional regular grid of pixels. The data assigned to a pixel will be referred to as pixel data. The volume 13 is represented by a regular grid of voxels 14, whereby each voxel contains data called voxel data.

In a first step, a voxel 15 is projected onto one of the projection planes, e.g. onto the projection plane 9. As a result, the projected voxel center 16 is obtained. As shown in Fig. 3B, the projected voxel center 16 is surrounded by four adjacent pixels 17, 18, 19, 20. In order to determine the intensity value at the projected voxel center 16, a bilinear interpolation of the pixel data of the adjacent pixels 17, 18, 19, 20 is performed.

As soon as the intensity data corresponding to the projected voxel center 16 is known, this value is weighted with a scaling factor that is proportional to one over the square of the distance between the voxel 15 and the X-ray source. Next, the weighted value is added to the voxel data of the voxel 15.

With respect to the voxel 15, this procedure is repeated for the projections 10 and 11. For each of the voxels, the contributions of all the projections are accumulated. By summing up the contributions of all the projections planes to each of the voxels, the intensity distribution of the three-dimensional volume 13 can be regenerated.

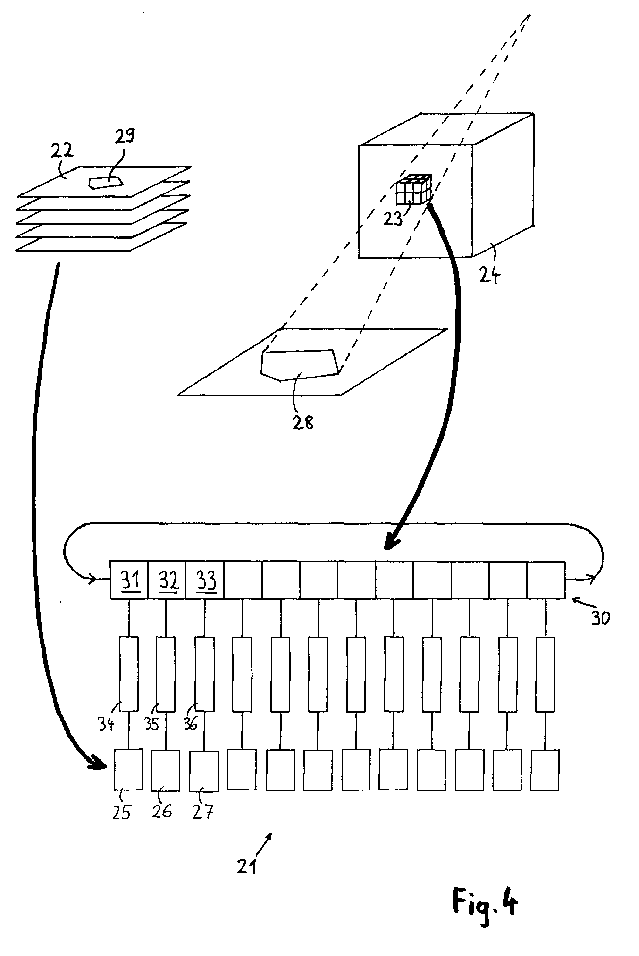

From the above explanation, it is obvious that these calculations are computationally expensive. In order to minimize the time required for backprojecting the acquired projections onto the volume, a dedicated backprojection unit 21 has been developed, which is shown in Fig. 4. The backprojection unit 21 comprises a multitude of pipelines that are arranged in parallel. Preferably, the backprojection unit 21 is implemented as a dedicated hardware unit, and further preferably by means of an FPGA (Field Programmable Gate Array).

The backprojection unit 21 comprises a set of projection buffers 25, 26, 27, ... , with each of the projection buffers being adapted for buffering pixel data of a corresponding projection. In the example of Fig. 4, the backprojection unit 21 comprises twelve different projection buffers for processing pixel data of twelve different projections in parallel.

As a preliminary step, the subvolume 23 is projected onto each of the projection planes. For each of the projections, a respective region of interest 28, 29, ... is determined. Only pixel data within a respective region of interest is loaded into the corresponding projection buffer, because only pixel data within the respective region of interest is required for backprojecting pixel data of the projections 22 onto the subvolume 23. The size of the projection buffers 25, 26, 27, ... is adapted for buffering pixel data of a corresponding projection's region of interest.

In the example shown in Fig. 4, the subvolume 23 comprises 2x2x3 = 12 voxels. The voxel data of the subvolume 23 is transferred to the backprojection unit 21. In particular, the voxel data is written to a shift register 30 that comprises twelve storage cells 31, 32, 33, .... The backprojection unit 21 further comprises twelve pipelines 34, 35, 36, .... These pipelines are adapted for deriving, from the pixel data stored within the projection buffers, the respective contributions to the voxel data, and for adding these contributions to the voxel data stored in the shift register 30.

In the following, the structure of the pipeline 34 will be discussed in more detail. The pipeline 34 comprises an address generator that is adapted for projecting the center of a voxel onto a projection plane, and for determining the projected voxel center of the voxel in the storage cell 31. Preferably, the coordinates of the projected voxel center in the coordinate system of the projection plane are determined by means of vector analysis. As soon as the coordinates of the projected voxel center are known, the four pixels adjacent to the projected voxel center are known as well, and the corresponding pixel data of these four pixels can be fetched from the projection buffer 25. In the example shown in Fig. 3B, after the coordinates of the projected voxel center 16 are known, pixel data of the four pixels 17, 18, 19, 20 can be fetched from the projection buffer.

The pipeline 34 further comprises a bilinear interpolation unit. By performing a bilinear interpolation of the pixel data of the four pixels adjacent to the projected voxel center, a corresponding pixel value at the location of the projected voxel center is derived. The respective contributions of the adjacent four pixels might e.g. be specified by the fractional part of the projected voxel center's coordinates. The pixel values might e.g. be intensity values, brightness values, color parameters, etc.

Next, the obtained value at the projected voxel center has to be weighted with a scaling factor that is proportional to one over the square of the distance between voxel and source. For this purpose, the value at the projected voxel center is provided to a weighting unit, and there, it is multiplied with said scaling factor.

Finally, the scaled value, which represents the contribution of the projection contained in the projection buffer 25, has to be added to the voxel data in the storage cell 31. The pipeline 34 comprises an adder unit adapted for adding the scaled value to the voxel data of the storage cell 31, and for writing the obtained result to the storage cell 31.

After the contributions provided by the pipelines 34, 35, 36, ... have been processed, the contents of the shift register 30 are shifted by one position. After the voxel data has been shifted by one position, each of the pipelines 34, 35, 36, ... calculates the contribution of its projection to the new voxel data contained in the corresponding storage cell. After the contents of the shift register have been shifted twelve times, each one of the subvolume's voxels has been subjected to the contributions of each of the twelve projections. The updated voxel data is rewritten to the memory, and voxel data of another subvolume is loaded into the shift register 30. For processing the new subvolume, it might be necessary to fully or partially replace some of the regions of interest contained in the projection buffers 25, 26, 27, .... After all the subvolumes of the volume 24 have been processed, the next set of twelve proceeding projections is loaded into the projection buffers, and all the subvolumes of the volume 24 are processed again. This procedure is repeated until all the acquired projections 22 have been taken care off.

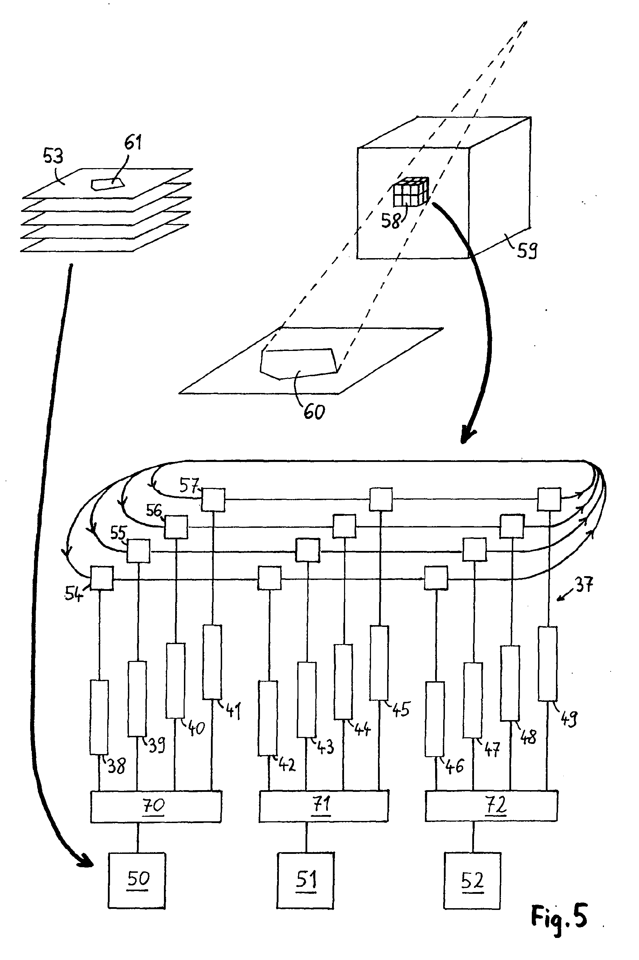

Fig. 5 shows an embodiment of the present invention. In contrast to the solution shown in Fig. 4, the backprojection unit 37 only comprises three projection buffers 50, 51, 52, with each of the three projection buffers being adapted for storing pixel data of one of the projections 53.

The backprojection unit 37 comprises twelve pipelines 38, 39, ..., 49 that operate in parallel. Hence, both the embodiment of Fig. 4 and the embodiment of Fig. 5 comprise twelve pipelines, which means that the degree of parallelism has not been changed. However, in the embodiment shown in Fig. 5, the contribution of a certain projection is simultaneously processed for four different voxels. For example, the contribution of the projection stored in the projection buffer 50 is simultaneously calculated for four voxels stored in the storage cells 54, 55, 56, 57.

In the embodiment shown in Fig. 5, the number of projections that are processed simultaneously is reduced from twelve to three, but the number of voxels that are processed per projection is raised from one to four: the contribution to the voxel data provided by a certain projection is simultaneously calculated for four voxels in parallel. For example, the pipelines 38, 39, 40, 41 process pixel data of one projection that is stored in the projection buffer 50. In embodiments of the present invention, the overall degree of parallelism is preserved. However, the parallelism is shifted from parallely processing different projections to parallely processing an increased number of voxels per projection.

Before a subvolume 58 of the volume 59 is processed, the subvolume 58 is projected onto each of the projections 53, and corresponding regions of interest 60, 61 are determined. The pixel data of these regions of interest are loaded into the projection buffers 50, 51, 52. The voxel data of the subvolume 58 is loaded into the twelve storage cells 54, 55, .... The twelve storage cells shown in Fig. 5 form four shift registers, with each of the shift registers comprising three storage cells. These shift registers allow to shift the voxel data from the pipelines corresponding to a first projection to the pipelines corresponding to a second and to the pipelines corresponding to a third projection. Thus, the contributions of the three projections stored in the projection buffers 50, 51, 52 can be taken care of consecutively.

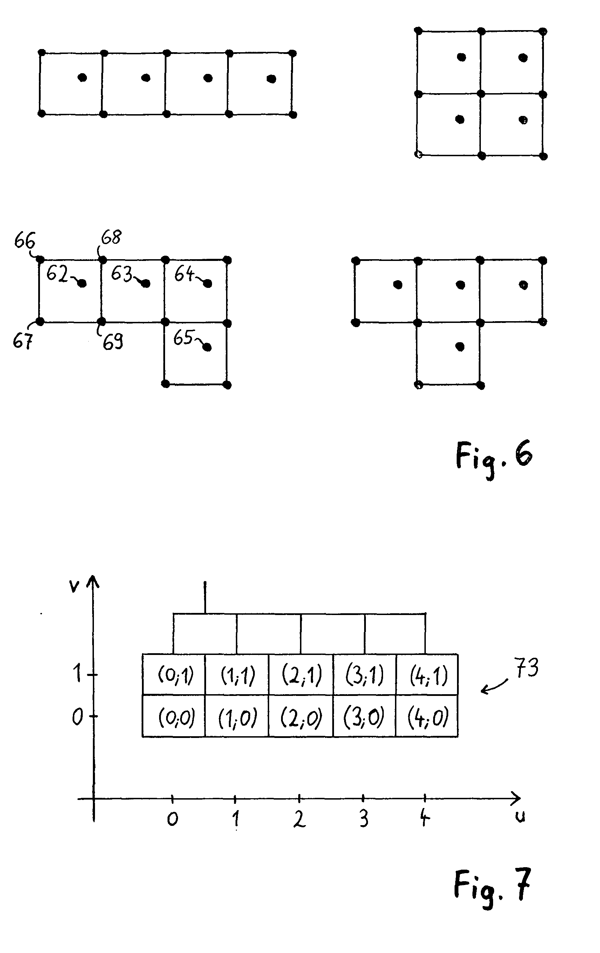

The storage cells 54, 55, 56, 57 contain voxel data of contiguous voxels. When projecting the centers of these voxels onto one of the projection planes, patterns like the ones shown in Fig. 6 are obtained. In Fig. 6, only a subset of the possible patterns are shown as an example. Each of the projected voxel centers 62, 63, 64, 65 is surrounded by four neighboring pixels. From Fig. 6, it can be seen that in the case of four contiguous voxels, nine or ten pixel values have to be fetched simultaneously from the projection buffer 50. These nine or ten pixel values have to be distributed to the four pipelines 38, 39, 40, 41 in a way that each pipeline receives four input values. For example, the pixel values of the pixels 66, 67 are provided to the pipeline 38, the pixel values of the pixels 68, 69 are distributed both to the pipeline 38 and to the pipeline 39, etc.

The task of routing the pixel values to the respective pipelines is accomplished by means of multiplexers 70, 71, 72. For distributing nine or ten pixel values to the 4x4=16 inputs of a pipeline, 10x16 multiplexers are respectively employed. For example, the multiplexer 70 is adapted for distributing the pixel values fetched from the projection buffer 50 to the corresponding pipelines 38, 39, 40, 41.

The operation of the pipelines 38, 39, 40, ... shown in Fig. 5 is identical to the operation of the pipelines shown in Fig. 4. Each pipeline comprises an interpolation unit, a weighting unit and an adder unit. The contributions of the projection stored in the projection buffer 50 are added to voxel data contained in the storage cells 54, 55, 56, 57. Then, the voxel data of the four shift registers is shifted by one position, and the contributions of the next projection are processed. After the contributions of the three projections stored in the projection buffers 50, 51, 52 have been processed, the modified voxel data is rewritten to the subvolume 58. Then, either the next set of projections or the next subvolume can be processed.

The projection buffers 50, 51, 52 have to be implemented in a way that pixel data of up to ten adjacent pixels can be read out in parallel. This can be accomplished by storing the pixel data to ten different memory banks in a way that pixel values of adjacent pixels are contained in separate memory banks. Separate memory banks can be accessed in parallel.

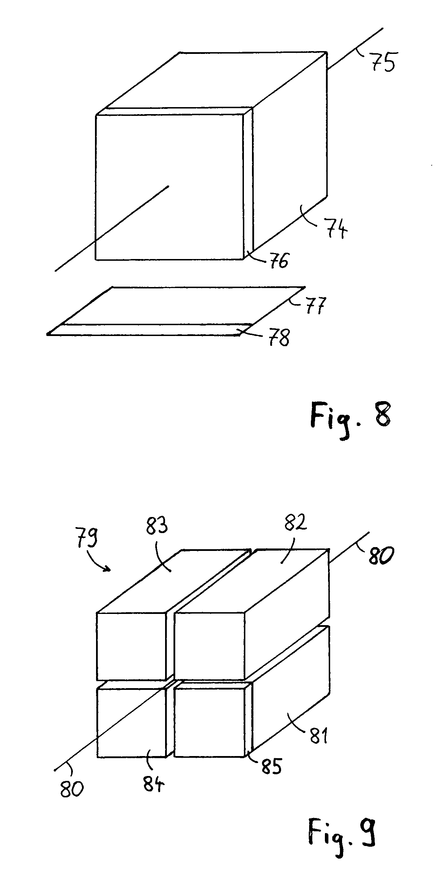

In Fig. 7, a projection buffer 73 comprising ten memory banks is shown, with the memory banks being arranged in two rows and five columns. In order to select a respective memory bank a pixel with the coordinates (x, y) has to be written to, the pixel coordinates (x, y) are converted into a two-dimensional index (u, v). The index u is obtained from the pixel's x-coordinate according to u = x mod 5. By means of the modulo 5 operation, each value of x is converted into an integer ranging from 0 to 4. The index u is used for selecting one of the five columns of memory banks shown in Fig. 7. The pixel's y-coordinate is used for selecting either the upper or the lower row of the memory banks. If y is an even number, the index v will be set to 0, and the lower row of memory banks will be selected. If y is an odd number, v will be set to 1, and the upper row of memory banks will be selected.

The above indexing scheme allows to identify the respective memory bank a pixel with the coordinates (x, y) has to be stored to. Using this indexing scheme, it is made sure that neighboring pixels are stored in separate memory banks. Therefore, pixel data of neighboring pixels can be fetched synchronously. Just to give an example, four adjacent pixels might e.g. be stored in the four memory banks with the indices (4,0), (4,1), (0,0), (0,1). Hence, they can be fetched synchronously.

The advantage of the embodiment shown in Fig. 5 is that the overall size of the storage required for accommodating the projection buffers 50, 51, 52 is reduced. Hence, the implementation of the backprojection unit 37 is simplified.

Another strategy for reducing the size of the required memory, which can be applied alternatively or additionally to the strategy shown in Fig. 5, is to reduce the respective size of the regions of interest that have to be loaded into the projection buffers. This can be accomplished by defining the respective shape of the subvolumes in a way that the silhouette obtained by projecting a subvolume onto any of the projection planes is as small as possible. For example, in Fig. 8, the volume 74 has been segmented into slices. The rotation axis 75, which corresponds to the rotation axis 5 shown in Fig. 1, is perpendicular to each one of the slices. When a slice 76 is projected onto a projection plane 77, the size of the obtained silhouette 78 is rather small. Hence, the amount of pixel data that has to be loaded into the projection buffers is rather small as well.

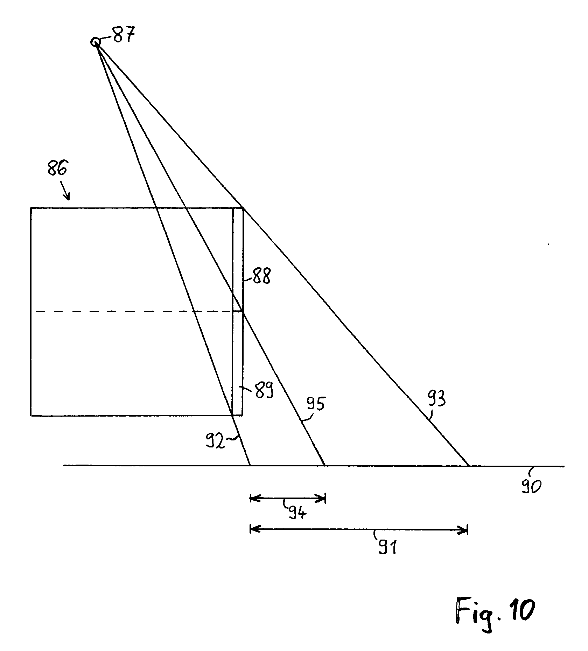

Starting from the "slicing technique" depicted in Fig. 8, Fig. 9 discloses an improvement that allows to further reduce the size of the projected silhouettes. Fig. 9 shows a volume 79 together with an axis of rotation 80. The volume 79 is segmented into four columns 81, 82, 83, 84, with slices of these columns being used as subvolumes. When a slice 85 is projected onto a projection plane, a projected silhouette is obtained, whereby the length of the projected silhouette is much smaller than the corresponding length of the silhouette 78 shown in Fig. 8. Additionally, also the width of the projected silhouette is significantly reduced relative to the width of the silhouette 78.

The reason is explained in Fig. 10, which shows a volume 86, an X-ray source 87, a slice 88 of the entire volume, and a slice 89 of one of the volume's columns. Both the big slice 88 and the small slice 89 are projected onto a projection plane 90. The width 91 of the large slice's silhouette is determined by the X-rays 92, 93 at the edges of the big slice 88. Accordingly, the width 94 of the small slice's silhouette is determined by the X-rays 92 and 95. It is obvious that the width 94 is considerably smaller than the width 91. Hence, by segmenting the volume 86 into four columns, it is possible to reduce both the length and the width of the corresponding silhouettes. This allows to further reduce the size of the projection buffers.

## Claims

1. A backprojection unit (37) adapted for backprojecting pixel data of n acquired projections (53) onto a voxel subvolume (58), with n being a natural number, wherein said backprojection unit (37) comprises for each of the n projections:
- voxel center determination means adapted for projecting m contiguous voxels onto a respective one of the projections, with m ≥ 2 being a natural number, thus obtaining m projected voxel centers (62, 63, 64, 65) per projection;
- memory access means adapted for fetching, for each of the m projected voxel centers, pixel data of pixels adjacent to the projected voxel center from a respective projection buffer (50);
- multiplexing means (70) adapted for distributing the fetched pixel data to m different pipelines (38, 39, 40, 41).

2. The backprojection unit according to claim 1, further comprising n projection buffers, with each of the projection buffers being adapted for storing pixel data of one of the n projections.

3. The backprojection unit according to claim 2, wherein each of the projection buffers comprises at least (2m+2) different memory banks.

4. The backprojection unit according to claim 3, wherein the memory access means are adapted for accessing some of the at least (2m+2) memory banks of the corresponding projection buffer in parallel.

5. The backprojection unit according to claim 1 or any one of the above claims, wherein pixel data of neighboring pixels are stored in different memory banks.

6. The backprojection unit according to claim 1 or any one of the above claims, wherein a respective memory bank a pixel is stored in is selected by means of a multidimensional index, wherein the multidimensional index is derived from the pixel coordinates (x, y).

7. The backprojection unit according to claim 1 or any one of the above claims, wherein a two-dimensional index (u, v) derived from the pixel coordinates (x, y) is used for selecting a respective one of the memory banks.

8. The backprojection unit according to claim 7, wherein, for m = 4, the two-dimensional index (u, v) is determined as (u, v) = (x mod 5, y mod 2) .

9. The backprojection unit according to claim 1 or any one of the above claims, wherein at least one of the pipelines comprises:
- pixel data interpolation means adapted for performing a bilinear interpolation of the pixel data of pixels adjacent to a respective projected voxel center, in order to obtain an interpolated pixel value at the respective projected voxel center.

10. The backprojection unit according to claim 9, wherein at least one of the pipelines further comprises:
- a weighting unit adapted for weighting the interpolated pixel value at the projected voxel center with the inverse square of the distance between voxel and source, in order to obtain a weighted pixel value at the projected voxel center.

11. The backprojection unit according to claim 10, wherein at least one of the pipelines further comprises:
- an adder unit adapted for adding the weighted pixel value at the projected voxel center to voxel data of the corresponding one of the m contiguous voxels.

12. The backprojection unit according to claim 11, wherein the weighted pixel values are added to the contents of storage cells that belong to m different shift registers.

13. The backprojection unit according to claim 1 or any one of the above claims, wherein voxel data of the m contiguous voxels is stored in storage cells of m shift registers, said shift registers being adapted for accumulating the contributions of the n projections.

14. The backprojection unit according to claim 12 or claim 13, wherein each of the m shift registers comprises n storage cells that correspond to the n different projections.

15. The backprojection unit according to claim 12 or any one of the above claims, wherein, after voxel data stored in the m shift registers has been updated, the contents of the shift registers are shifted by one position in order to consecutively process the contributions of the n different projections.

16. The backprojection unit according to claim 1 or any one of the above claims, wherein the voxel subvolume is a slice of a voxel volume.

17. The backprojection unit according to claim 16, wherein the slices are oriented perpendicular to an axis of rotation that has been used for acquiring the projections.

18. The backprojection unit according to claim 1 or any one of the above claims, wherein a voxel volume is initially segmented into a plurality of columns, with each voxel subvolume being a slice of a respective column.

19. The backprojection unit according to claim 1 or any one of the above claims, wherein the backprojection unit is implemented as a hardware unit, in particular by means of a Field Programmable Gate Array (FPGA).

20. A method for backprojecting pixel data of n acquired projections (53) onto a voxel subvolume (58), with n being a natural number, the method comprising the following steps that are carried out for each of the n projections:
- projecting m contiguous voxels onto a respective one of the projections, with m ≥ 2 being a natural number, thus obtaining m projected voxel centers (62, 63, 64, 65) per projection;
- fetching, for each of the m projected voxel centers, pixel data of pixels adjacent to the projected voxel center from a respective projection buffer (50), and
- distributing the fetched pixel data to m different pipelines (38, 39, 40, 41).

21. The method according to claim 20, wherein the pixel data of the n projections are stored in n separate projection buffers.

22. The method of claim 20 or claim 21, wherein the step of fetching comprises accessing at least some of the at least (2m+2) memory banks in parallel.

23. The method of any of claims 20 to 22, further comprising a step of selecting a respective memory bank by means of a multidimensional index that is derived from the pixel coordinates (x, y).

24. The method of any of claims 20 to 23, further comprising a step of selecting a respective memory bank by means of a two-dimensional index (u, v) that is derived from the pixel coordinates (x, y).

25. The method of any of claims 20 to 24, further comprising a step of performing a bilinear interpolation of the pixel data of pixels adjacent to a respective projected voxel center, in order to obtain an interpolated pixel value at the respective projected voxel center.

26. The method of claim 25, further comprising a step of weighting the interpolated pixel value at the projected voxel center with the inverse square of the distance between voxel and source, in order to obtain a weighted pixel value at the projected voxel center.

27. The method of claim 26, further comprising a step of adding the weighted pixel value at the projected voxel center to voxel data of the corresponding one of the m contiguous voxels.

28. The method of any of claims 20 to 27, further comprising a step of accumulating the contributions of the n projections by means of m shift registers, whereby each of the m shift registers comprises n storage cells that correspond to the n different projections.

29. The method of claim 28, further comprising a step of shifting the contents of the m shift registers by one position, after voxel data stored in the m shift registers has been updated, in order to consecutively process the contributions of the n different projections.

30. The method of any of claims 20 to 29, Wherein slices of a voxel volume are chosen as voxel subvolumes, with the slices being oriented perpendicular to an axis of rotation that has been used for acquiring the projections.

31. The method of any of claims 20 to 30, further comprising a step of initially segmenting a voxel volume into a plurality of columns, with slices of said columns being chosen as voxel subvolumes.

32. The method of claim 31, wherein a separate backprojection is performed for each slice of the column.

33. Computer program product, comprising computer program means adapted to embody the features of the backprojection unit as defined in anyone of claims 1 to 18 when said computer program product is executed on a computer, digital signal processor, or the like.

34. Computer program product, comprising computer program means adapted to perform the method steps as defined in anyone of claims 20 to 32 when said computer program product is executed on a computer, digital signal processor, or the like.
